# EUROPEAN PATENT APPLICATION

(11) **EP 2 846 038 A1**
(43) Date of publication of application: **11.03.2015**
(21) Application number: 13183168.7
(22) Date of filing: 05.09.2013
(51) Int. Cl.: F03D 11/00

(54) **Cooling system of a wind turbine**

(71) Applicant: Siemens Aktiengesellschaft, 80333 München (DE)
(72) Inventor: Soerensen, Carsten Moeller, 7260 Sdr. Omme (DK)

(57) **Abstract**

The invention relates to a cooling system of a wind turbine (10). The wind turbine (10) comprises a tower (20) and an electrical component (16). The tower (20) comprises an upper section (22) and a lower section (23). The electrical component (16) is located in the lower section (23) of the tower (20). The cooling system comprises a cooling channel (31) for transporting cooled air (33) from the upper section (22) of the tower (20) to the lower section (23) of the tower. A lower end (35) of the cooling channel (31) is coupled to the electrical component (16) such that the cooled air (33) can cool the electrical component (16). The cooling system further comprises a cooling circuit with air (32) as cooling medium, wherein the air (32), which is heated by the electrical component (16), can rise inside the tower (20) and cools down during its rise. The heat of the air (32) can at least partly be given off at at least one inner wall (21) of the tower (20). Finally, the cooling system comprises a means (37) for establishing a flow of the cooled air (33) through the cooling channel (31). An advantage of the cooling system is that the cooled air (33) which exits the lower end (35) of the cooling channel (31) can specifically be guided to a particular section of the lower section (23) of the tower (20). The invention is furthermore also related to a method for cooling a wind turbine (20) with such a cooling system.

## Description

### FIELD OF THE INVENTION

The present invention relates to a cooling system of a wind turbine. More specifically, the invention relates to a way of cooling an electrical component which is located inside a tower of the wind turbine. Furthermore, the invention relates to a method for cooling a wind turbine.

### BACKGROUND OF THE INVENTION

An electrical component which is located inside a tower of a wind turbine may generate a considerable amount of heat during operation of the electrical component. In this context, operation of the electrical component includes any operational modes where a current or a voltage is applied to or generated by the electrical component. It is beneficial if the generated heat is efficiently dissipated, i.e. discharged.

One way to dissipate the generated heat is an exchange of the heated air inside the tower with air of the ambiance around the tower. This exchange of air may happen continuously or temporarily. Such a cooling system, which is based on the exchange of the air between inside the tower and outside the tower is referred to as an open cooling system.

Such an open system exhibits several disadvantages. For instance, humid air can enter the interior of the tower and possibly damages the wind turbine. Additionally, air with a high degree of salinity may enter the interior of the tower and may be detrimental for the wind turbine as well. Entrance of air with a high degree of salinity and/or humidity is particularly relevant for a wind turbine which is erected near the coast or off-shore.

The patent application WO 2010/069954 Al discloses a cooling system for a wind turbine which is substantially closed with regard to the ambiance. Heat which is generated in a nacelle of the wind turbine is guided from the nacelle into the tower of the wind turbine and subsequently flows downward along inner walls of the tower. During its way downwards the heated air cools down and is finally transported upwards again via a pipeline.

The European patent EP 1 200 733 B2 discloses a wind turbine with a completely or partly closed cooling circuit. Heated air is guided via a double-walled constructed tower or via a flexible hose from one section of the tower to another section of the tower and subsequently gives off its heat to walls of the tower.

A disadvantage of the proposed solutions is that the cooled air is not guided specifically towards the electrical component where the heat is generated. Consequently, an efficiency of the proposed cooling system is low.

Thus, there exists an urgent need for an improved cooling system of a wind turbine.

### SUMMARY OF THE INVENTION

This objective is achieved by the independent claims. The dependent claims describe advantageous developments and modifications of the invention.

In accordance with the invention there is provided a cooling system of a wind turbine. The wind turbine comprises a tower and an electrical component. The tower comprises an upper section and a lower section. The electrical component is located in the lower section of the tower. The cooling system comprises a cooling channel for transporting cooled air from the upper section of the tower to the lower section of the tower, wherein a lower end of the cooling channel is coupled to the electrical component such that the cooled air can cool the electrical component. Furthermore, the cooling system comprises a cooling circuit with air as cooling medium. The air, which is heated by the electrical component, can rise inside the tower and cools down during its rise, while the heat of the air can at least partly be given off at at least one inner wall of the tower. Finally, the cooling system comprises a means for establishing a flow of the cooled air through the cooling channel.

An advantage of the cooling system is that the cooled air, which exits the lower end of the cooling channel, can specifically be guided to a particular section of the lower section of the tower. Compared to conventional cooling systems, where the heated air is discharged in a controlled manner by means of an air line, e.g. a pipeline or a hose, and subsequently vaguely flows back to the section which is to be cooled, the inventive cooling system is designed completely differently. The inventive cooling system is based on the idea to arrange the cooling circuit such that the heated air, which is to be discharged from the electrical component, can rise inside the tower while it gives off at least a part of its heat at the inner wall of the tower. During the rise and due to the contact of the air with the inner wall of the tower, the air cools down. Subsequently, the cooled air is transported by an air line, which is referred to as the cooling channel, back to the electrical component, which is to be cooled.

It may, for instance, on the one hand be advantageous to cool a whole area, i. e. a whole portion of the lower section of the tower. This whole portion of the lower section of the tower may for example be confined by a floor which is perpendicular to inner walls of the tower. The cooling of the whole area can easily be achieved by placing the cooling channel such that the targeted portion of the lower section of the tower is fully flown through by the cooled air.

On the other hand, it may also be desired that only a specific portion of the lower section of the tower is cooled by the cooled air. This may for example be a specific electric cabinet or switch board which shall be cooled. Then, the cooling channel can directly be guided into the specific area and subsequently cools this area by the cooled air.

Another advantage of directly guiding the heated air to at least one inner wall of the tower, instead of first guiding the heated air into an air line and subsequently guiding the air to the inner wall, is that thus the heated air can rapidly give off a part of its heat to the inner wall of the tower. Thus, the temperature difference between the heated air and the comparatively cool inner wall is large. If, as it is shown in the state of the art, the heated air is firstly transported upwards by a transporting channel and subsequently cools down during its fall along the inner wall, the temperature difference between the heated air and the cooler inner walls is smaller. In other words, the inventive cooling system is more efficient than conventional cooling systems for a wind turbine.

It shall be noted that the description that the lower end of the cooling channel is "coupled" to the electrical component has to be understood in a broad way. The lower end of the cooling channel can, for instance, be directly coupled to the electrical component, which is for example the case when the cooling channel is guided into the electric cabinet or the switch board. On the other hand, the coupling between the cooling channel and the electrical component can also be more indirect as it is for example the case when the lower end of the cooling channel ends somewhere in the lower section of the tower and thus a whole region or portion of the lower section of the tower is cooled by the cooling system.

In an advantageous embodiment, the cooling channel comprises at least partly a rigid tube.

An advantage of the fact that at least partly the cooling channel comprises a rigid part, i.e. a tube, is an increased stability of the cooling channel. This is in particular advantageous if during operation of the cooling system in certain time periods only a small flow or no flow at all of the cooling medium through the cooling channel is existent. If then the cooling channel was completely made of a flexible material, the risk arises that the cooling channel breaks down or falls down.

It is however advantageous if the cooling channel comprises at least partly a flexible hose.

A cooling channel comprising at least some parts which are flexible is advantageous if for example the tower itself comprises a plurality of tower segments which are connected with each other during erection, i.e. mounting of the tower. Then, the cooling channel can already be prefabricated and included in the individual tower segments and thus can also be connected with each other during erection and connection of the tower segments. In this case flexible connection parts of the cooling channel are advantageous.

In another advantageous embodiment, the lower end of the cooling channel is located in the lower section of the tower and an upper end of the cooling channel is located in the upper section of the tower. The tower comprises at least a first floor and the first floor is located between the lower end of the cooling channel and the upper end of the cooling channel.

A plurality of floors may advantageously be existent within the tower for an increased mechanical stability of the tower. Advantageously, the first floor is substantially perpendicular to an inner wall of the tower. In this context, the notion "substantially" includes deviations of up to 10 percent. In another advantageous embodiment, at least one opening in the first floor and/or between the first floor and the inner wall is provided such that the heated air is able to rise upwards.

As the heated air is supposed to rise upwards, openings in the floor are advantageous. Exemplarily, the openings may be in a range of several centimeters.

It may, however, be even more advantageous to provide the openings between the first floor and the inner wall. Thus, the heated air, which is supposed to rise upwards, is guided towards the inner wall automatically.

In another advantageous embodiment, the tower comprises at least one flow deflector for guiding the air flow of the heated air towards the inner wall of the tower.

In order to achieve a high efficiency of the cooling system, it is advantageous to specifically guide the heated air towards the inner wall of the tower. Advantageously, this is carried out by a flow deflector, which might exemplarily be a set of panels or plates. Another way to advantageously guide the heated air towards the inner wall is a blowing device, e.g. a fan. Such a device may beneficially be used to blow, i.e. to press or to push, the heated air towards the inner wall.

In yet another advantageous embodiment, the wind turbine comprises a nacelle which is attached to the top of the tower and which is in thermal connection with the tower. The means for establishing a flow of the cooled air is arranged to create an air flow through the cooling channel. The air flow through the cooling channel is at least ten times greater than a flow of air flowing from the interior of the tower into the nacelle.

In other words, a leakage flow of air from the tower to the nacelle is advantageously at least ten times smaller than the air flow through the cooling channel. An advantage of such a relatively small leakage flow is that only a relatively small fraction of air within the cooling circuit is exchanged during operation of the cooling system.

In another advantageous embodiment, the leakage flow of air flowing from the interior of the tower into the nacelle is determined by the volume of air which escapes from the interior of the tower during one cycle of the cooling circuit.

A cycle of the cooling circuit is defined as the time period during which a specific portion of air is heated by the electrical component, rises along the inner wall, is transported back by the cooling channel and comes back to the region where originally the air has been heated. Advantageously, the volume of air leaking out of the interior of the tower during one cycle is less than 5 percent, in particular less than 1 percent, of the whole volume of air within the cooling circuit.

In yet another advantageous embodiment, the leakage of air escaping the interior of the tower may be defined as the fraction of air which escapes during one hour of operation of the cooling system. Advantageously, the volume of air leaking out from the interior of the tower into the ambiance during one hour of operation is less than 1 percent, in particular less than 0.2 percent, of the whole volume of the air of the cooling circuit.

In another advantageous embodiment, the tower is sealed substantially air-tight with regard to an ambiance of the tower such that the cooling circuit is a substantially closed cooling circuit.

Advantages of a substantially closed cooling circuit are, for instance, the fact that no, or almost no air from the ambiance, which might comprise humidity or salinity, can enter the cooling circuit and subsequently damage the wind turbine.

In another advantageous embodiment, operation of the wind turbine can be maintained at a low temperature of the ambiance, while the temperature of the interior of the tower is increased by heated air which is distributed by at least one inner wall of the tower.

In other words, the cooling system with the features described above can advantageously also be used to heat the interior of the tower if the temperature of the ambiance is low. This is due to the fact that the heated air giving off its heat at the inner wall of the tower is distributed by the inner wall of the tower within the tower. Particularly, low temperatures of the ambiance refer to temperatures below 0 degree Celsius.

In another advantageous embodiment, the electrical component comprises power electronics, in particular at least one converter and/or at least one rectifier and/or at least one inverter.

Power electronics refer to the control and conversion of electric power. A wind turbine comprises advantageously power electronics which beneficially are located in the lower section of the tower. During operation of the wind turbine, the power electronics generate heat, which needs to be dissipated. In particular, the heat may be generated by converters, rectifiers and/or inverters. It may be the case that only one of these components is present in the tower of the wind turbine. However, it may also be the case that several of the given examples of electrical components are present in the lower section of the tower. By using a cooling channel as described above for guiding the cooled air to the electrical component it can be decided and realized if, for example, one specific electrical component needs to be cooled or if several or all electrical components shall be addressed and applied with the cooled air exiting from the lower end of the cooling channel.

Furthermore, the invention is directed towards a method for cooling a wind turbine, wherein the wind turbine comprises a tower and an electrical component. The tower comprises an upper section and a lower section, and the electrical component is located in the lower section of the tower. The method comprises the following steps:
a) Transporting cooled air from the upper section of the tower to the lower section of the tower through a cooling channel, while the cooling channel is coupled to the electrical component;
b) cooling the electrical component by means of the cooled air;
c) guiding heated air, which is heated by the electrical component inside the tower such that the heated air rises inside the tower and cools down during its rise, wherein the heated air at least partly gives off heat of the air at at least one inner wall of the tower; and
d) the thus cooled air flows through the cooling channel by a means for establishing the flow of the cooled air through the cooling channel.

In other words, the method for cooling a wind turbine comprises process steps that can be performed by a cooling system which has been described above. Thus, advantageous embodiments and features of the cooling system that has been described above also apply for the proposed method for cooling a wind turbine.

### BRIEF DESCRIPTION OF THE DRAWING

Embodiments of the invention are now described, by way of example only, with reference to the accompanying drawing, of which:

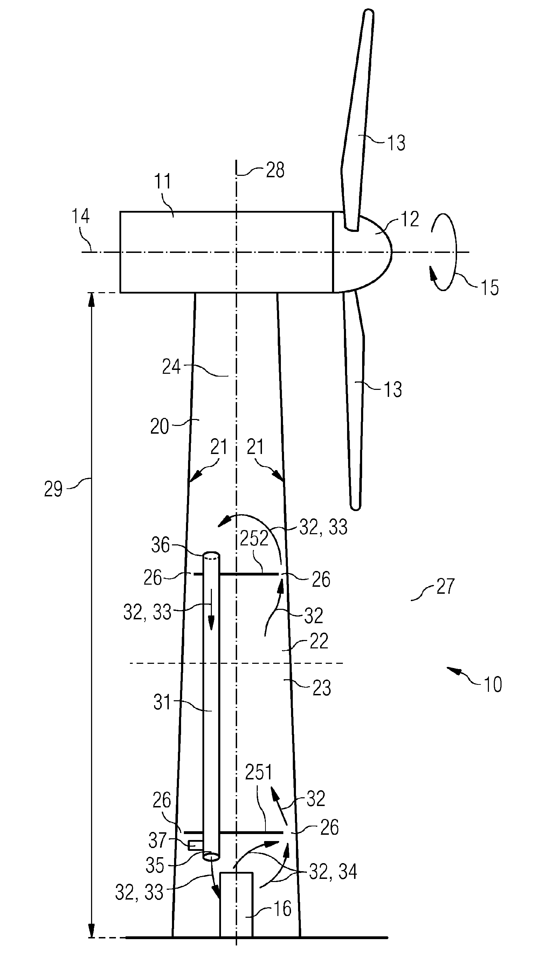

Figure 1 shows a wind turbine with a cooling system.

The illustration in the drawing is schematical.

### DESCRIPTION OF THE DRAWING

Figure 1 shows a wind turbine 10, comprising a tower 20, a nacelle 11, a hub 12 and two rotor blades 13. The nacelle 11 is preferably attached rotatably relative to the tower 20. Rotation of the nacelle 11 with regard to the tower 20 can be performed about a yawing axis, which is in parallel to a longitudinal axis 28 of the tower 20. The hub 12 is rotatably mounted with regard to the nacelle 11 about a rotor axis of rotation 14. Rotation can be performed in a rotational direction 15. The wind turbine rotor blades 13 are attached to the hub 12 by flanges. It shall be noted that the scope of the invention also relates to a wind turbine which comprises one rotor blade, three rotor blades or even more rotor blades.

The tower 20 has the shape of a truncated cone. The outer surface and the inner surface of the tower 20 are curved. The tower 20 can be divided into an upper section 22 and a lower section 23. In particular, the tower 20 may be divided into two halves with regard to the longitudinal axis 28 of the tower 20 by the upper section 22 and the lower section 23. The tower 20 may, however, also be divided into a lower section 23 which comprises 10 percent with regard to the tower height 29; consequently, in this case, the upper section 22 comprises 90 percent of the tower height 29. In the concrete example of Figure 1, the lower section 23 comprises 40 percent of the tower height 29.

The tower 20 comprises walls. The inner surface of the walls is referred to as the inner wall 21. The walls of the tower 20 separate an interior 24 of the tower 20 from the ambiance 27 outside. The tower 20 depicted in Figure 1 comprises two floors, a first floor 251 and a second floor 252. Both floors 251, 252 are substantially perpendicular to the inner wall 21. The floors 251, 252 comprise sectional openings 26 which allow air to pass from one side of the floor to the other side of the floor. While the tower height 29 might reach for instance 80 m (meters), the openings 26 only have a maximal extension of a few centimeters, e. g. 5 cm.

An electrical component 16, which comprises a converter, a rectifier and an inverter is located in the lower section 23 of the tower 20. During operation of the wind turbine 10 heat is dissipated by the electrical components 16.

The cooling system comprises a cooling channel 31, a means 37 for establishing a flow of cooled air 33 through the cooling channel 31 and a cooling circuit with a cooling medium which in the example of Figure 1 comprises air 32. The heated air 34 which is dissipated by the electrical component 16 flows towards the opening 26 between the first floor 251 and the inner wall 21. There the heated air 34 gives off a part of its heat to the inner wall 21. Subsequently, the heated air 34 rises substantially along the longitudinal axis 28 of the tower 20. When the air 32 is in thermal contact with the inner wall 21 it continuously gives off parts of its heat. At the second floor 252, the air 32 again flows through the opening 26 between the second floor 252 and the inner wall 21. Subsequently, the air 32 is cooled with regard to the heated air 34 and is sucked by the means 37 for establishing a flow of the cooled air 33 through the cooling channel 31 into the cooling channel 31. The cooled air 33 flows through the cooling channel 31 and exits from the cooling channel 31 at a lower end 35 of the cooling channel 31. The cooled air 33 finally reaches the electrical component 16 and cools it.

The cooled air 33 enters the cooling channel 31 at an upper end 36 of the cooling channel 31, the upper end 36 being located in the upper section 22 of the tower 20.

In the concrete example of Figure 1, the cooling channel 31 is a rigid pipe with a length of approximately 20 m.

## Claims

1. Cooling system of a wind turbine (10), the wind turbine (10) comprising a tower (20) and an electrical component (16), the tower (20) comprising an upper section (22) and a lower section (23), and the electrical component (16) being located in the lower section (23) of the tower (20),
wherein the cooling system comprises
- a cooling channel (31) for transporting cooled air (33) from the upper section (22) of the tower (20) to the lower section (23) of the tower, wherein a lower end (35) of the cooling channel (31) is coupled to the electrical component (16) such that the cooled air (33) can cool the electrical component (16),
- a cooling circuit with air (32) as cooling medium, wherein the air (32), which is heated by the electrical component (16), can rise inside the tower (20) and cools down during its rise, while the heat of the air (32) can at least partly be given off at at least one inner wall (21) of the tower (20), and
- a means (37) for establishing a flow of the cooled air (33) through the cooling channel (31).

2. Cooling system according to claim 1,
wherein the cooling channel (31) comprises at least partly a rigid tube.

3. Cooling system according to one of the preceding claims, wherein the cooling channel (31) comprises at least partly a flexible hose.

4. Cooling system according to one of the preceding claims, wherein
- the lower end (35) of the cooling channel (31) is located in the lower section (23) of the tower (20) and an upper end (36) of the cooling channel (31) is located in the upper section (22) of the tower (20),
- the tower (20) comprises at least a first floor (251), and
- the first floor (251) is located between the lower end (35) of the cooling channel (31) and the upper end (36) of the cooling channel (31).

5. Cooling system according to claim 4,
wherein at least one opening (26) in the first floor (251) and/or between the first floor (251) and the inner wall (21) is provided such that the heated air (34) is able to rise upwards.

6. Cooling system according to one of the preceding claims, wherein the tower (20) comprises at least one flow deflector for guiding the air flow of the heated air (34) towards the inner wall (21) of the tower (20).

7. Cooling system according to one of the preceding claims, wherein
- the wind turbine (10) comprises a nacelle (11) which is attached to the top of the tower (20) and which is in thermal connection with the tower (20),
- the means (37) for establishing a flow of the cooled air (33) is arranged to create an air flow through the cooling channel (31), and
- the air flow through the cooling channel (31) is at least 10 times greater than a flow of air (32) flowing from the interior (24) of the tower (20) into the nacelle (11).

8. Cooling system according to one of the preceding claims, wherein the tower (20) is sealed substantially airtight with regard to an ambiance (27) of the tower (20) such that the cooling circuit is a substantially closed cooling circuit.

9. Cooling system according to claim 8,
wherein operation of the wind turbine (10) can be maintained at a low temperature of the ambiance (27), while the temperature of the interior (24) of the tower (20) is increased by heated air (34) which is distributed by at least one inner wall (21) of the tower (20).

10. Cooling system according to one of the preceding claims, wherein the electrical component (16) comprises power electronics, in particular at least one converter and/or rectifier and/or inverter.

11. Method for cooling a wind turbine (10), the wind turbine (10) comprising a tower (20) and an electrical component (16), the tower (20) comprising an upper section (22) and a lower section (23), and the electrical component (16) being located in the lower section (23) of the tower (20),
wherein the method comprises
a) transporting cooled air (33) from the upper section (22) of the tower (20) to the lower section (23) of the tower (20) through a cooling channel (31), while the cooling channel (31) is coupled to the electrical component (16),
b) cooling the electrical component (16) by means of the cooled air (33),
c) guiding heated air (34), which is heated by the electrical component (16), inside the tower (20) such that the heated air (34) rises inside the tower (20) and cools down during its rise, while the heated air (34) at least partly gives off heat of the air (32) at at least one inner wall (21) of the tower (20), and
d) the thus cooled air (33) flows through the cooling channel (31) by a means (37) for establishing the flow of the cooled air (33) through the cooling channel (31).
